# EUROPEAN PATENT APPLICATION

(11) **EP 1 156 449 A2**
(43) Date of publication of application: **21.11.2001**
(21) Application number: 01109208.7
(22) Date of filing: 14.04.2001
(51) Int. Cl.: G06N 5/02

(54) **Advice service system**

(30) Priority: 19.04.2000 IT TO000372
(71) Applicant: Ciurcina, Marco, 10126 Turin TO (IT)
(72) Inventor: Ciurcina, Marco, 10126 Turin TO (IT)

(57) **Abstract**

A system that makes available a remote advice service comprises means for the acquisition of a structural knowledge base and a computer system to which a client has an interactive access, through a question-answer query operating according to the acquired knowledge base. The computer system is apt to formulate sequentially questions selected from the knowledge base and organised logically according to rules contained in the same knowledge base and according to the answers as given by the client, and to process the result of the requested advice service by selecting information from the knowledge base and from the answers, according to rules contained in the knowledge base. The result of the requested advice service is sent to the adviser together with the answers given by the client to be checked, and then the result modified as needed by the adviser is given to the client.

## Description

### Technical Field

The present industrial invention relates to the technical sector of information technology and in particular it concerns a method and a system for providing a remote advice service.

### Background art

At present, any method or system for providing a remote advice service does not exist. The purpose of this invention is to make available for the person requesting the advice service (the client) and especially for the person who has to provide such service (the adviser) tools apt to provide quickly and if necessary in real time, through the electronic means available today, the result of specific competences.

### Disclosure of invention

The method according to the invention presents the characteristics defined mainly in claim 1, and secondly in the minor claims 2-5. The method according to the invention is defined mainly in claim 6 and secondly in the minor claims 7-11.

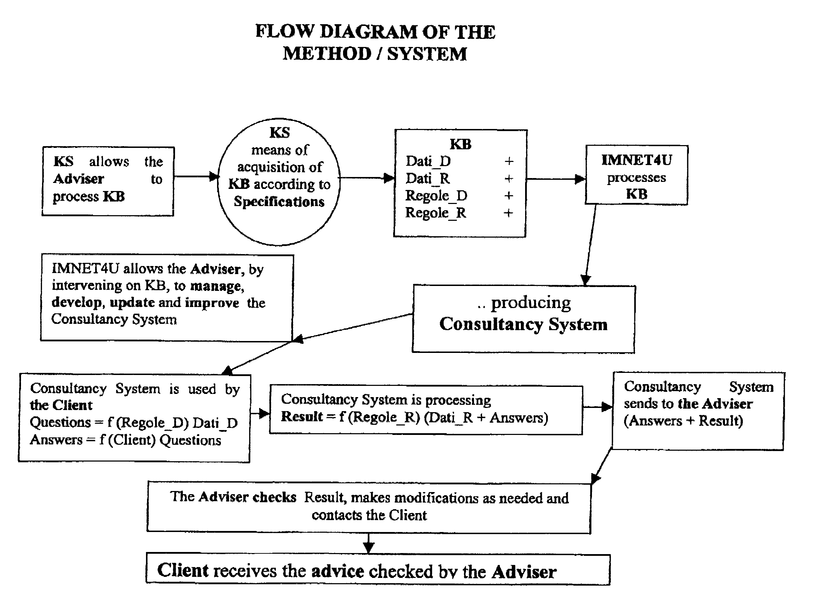

The invention shall now be described in detail with reference to the attached drawing, supplied by way of non limiting example, which shows in the shape of block diagrams the path of the method's logical flows as performed by the system according to the invention.

In general terms, the method and the system according to the invention are suitable for resolving an endless number of consultancy problems: where it is possible to standardise, it is possible to use the invention efficiently. Choosing what and how to formalise logically shall depend on the intentions of the adviser: anyway the system makes it possible for the adviser to modify, develop and update at regular intervals the knowledge base that operates the consultancy system, for example adapting it to regulatory and jurisprudential changes related to the consultancy branch.

The system operates on the basis of a software program designed to process the required results with reference to the clients requests; these results are sent to the adviser who checks, modifies as needed and approves before sending them to the client. All this allows the client to receive the final result of the consultancy in a very short time, if not in real time.

The computer system that forms the nucleus of the method and of the system according to the invention can be accessed interactively by a client as well as by the professional for the above-mentioned operating, development and updating functions, electronically, and advantageously through *Internet.*

In order to better explain the method / system, we refer to the block diagram of the attached drawing, in which the following definitions are used:
**Client:** anyone using the Consultancy System
**Adviser:** anyone who possesses an organic set of competences of any kind and formalises them logically in KB
**Dati_D:** one or more databases from which the Consultancy System draws the Questions to be made to the Client according to Regole_D
**Dati_D:** one or more databases from which the Consultancy System draws the elements required for producing the Result according to Regole_D
**Questions:** the Dati_D that are actually presented to the Client according to Regole_D
**KB:** Knowledge base. Logical formalisation of a set of organic competences formulated by the Adviser according to the Specifications by using the KS and consisting in
   - Dati_D
   - Dati_R
   - Regole_D
   - Regole_R
**KS:** Knowledge Shaper. Graphical interface and acquisition logic of the KB according to the Specifications, which avoids routine operations and executes logical controls
**Regole_D:** processing modes, conditions and logic of the Questions to be made to the Client by using Dati_D
**Regole_R:** processing modes, conditions and logic of the pertinent Result given by the Client by using the elements of Dati_R and the values of the Answers
**Answers:** information supplied by the Client on the basis of the Questions formulated by the Consultancy System
**Result:** output produced by the Consultancy System on the basis of the Answers given by the Client
**Consultancy System:** processing of the IMNET4U system that transforms the KB in such a way as to make it available on the web or other environment usable via Internet or through any other kind of remote connection
**Specifications:** formal organisation rules of the KB.

With a detailed reference to the block diagram of the attached drawing, the method and the system according to the invention provide an initial phase of acquisition of a knowledge base (logical formalisation of an organic set of competences) by means of a logical and graphical interface, if necessary, also electronically. Such phase consists in the implementation and acquisition of a knowledge base made of different data groups (Dati_D, Dati_R, Regole_D and Regole_R).

The knowledge base (KB) is acquired by the system by means of a graphical and logical interface (KS) that simplifies the work of the adviser by making the organisational work of its own knowledge intuitive, and avoiding the routine operations and executing logical controls on the operations carried out.

The computer system (IMNET4U), working according to a software program, draws from the above mentioned knowledge base and can be accessed interactively by the client, as said through a question-answer query. Such computer system is designed to formulate sequentially questions selected in Dati_D and organised logically according to Regole_D and according to the answers as given by the client, and to process the result of the requested advice service by selecting information from Dati_R and from the answers, according to Regole_R.

At the end of the process, the system sends the adviser the answers given by the client and the result processed by the system Then the adviser checks the processed result by making modifications and integrations as needed.

At the end of this checking the final result is sent to the client.

As already explained previously, the query made by the client and the obtainment of the result are made remotely and electronically, preferably through *Internet:* to this effect the computer system shall be able to manage data and information on the *web* or other environment usable via *Internet,* or with any other kind of remote connection.

It will be manifest from what has been said above that the method and the system according to the invention are suitable for resolving an endless number of consultancy problems in all those cases in which the adviser is called to offer mainly standardised services. From this point of view the method and the system according to the invention allow to divert the commitment of the adviser towards services whose contents are more professional for what concerns peculiarity and complexity, by ensuring however the required accurate support towards the clients for what concerns more simple and routine problems.

Obviously, the details and ways in which the invention is carried out can be widely varied as to what has been described and illustrated, without departing from the spirit of this invention as defined in the following claims.

### Brief description of drawings

The enclosed drawing reproduces the flow chart of the method and the system as described above.

## Claims

1. Method that makes available a remote advice service, **characterized in that** it comprises the following phases:
- acquire, by means of a graphic and logical interface ("KS"), a knowledge base comprising at least: a first series of data consisting in questions related to specific competences of an adviser ("Dati_D"), at least a second series of data consisting in rules logically connected to said questions ("Regole_D"), at least a third series of data consisting in information related to said specific competences of the adviser ("Dati_R"), and at least a fourth series of data consisting of rules logically connected to said information ("Regole_R");
- prepare a computer system ("IMNET4U") that can be interactively accessed by the client through a question-answer query and apt to:
- formulate sequentially questions selected in said first series of data and organised logically according to said rules selected in said second series of data and according to the answers as given by the client,
- process the result of the requested advice service by selecting information from said third series of data and from said answers, according to said rules selected in said fourth series of data,
- send to the adviser the answers given by the client and said result to be checked,
- give the client, after such checking, said result modified as needed by the adviser.

2. A method according to claim 1, **characterized in that** it operates on the basis of a software program.

3. Method according to claim 1 or claim 2, **characterized in that** it can be managed, developed and updated by the adviser working on the knowledge base.

4. Method according to any one of the claims from 1 to 3, **characterised in that** said computer system and/or the acquisition function of the knowledge base are accessible electronically.

5. Method according to any one of the claims from 1 to 4, **characterized in that** said computer system and/or the acquisition function of the knowledge base are accessible through *Internet.*

6. A system that makes available a remote advice service, **characterized in that** it comprises:
- means of acquisition, by means of a graphic and logical interface ("KS"), of a knowledge base comprising at least: a first series of data consisting in questions related to specific competences of an adviser ("Dati_D"), at least a second series of data consisting in rules logically connected to said questions ("Regole_D"), at least a third series of data consisting in information related to said specific competences of the adviser ("Dati_R"), and at least a fourth series of data consisting of rules logically connected to said information ("Regole_R");
- a computer system ("IMNET4U") which can be interactively accessed by the client through a question-answer query and apt to:
- formulate sequentially questions selected in said first series of data and organised logically according to said rules selected in said second series of data and according to the answers as given by the client,
- process the result of the requested advice service by selecting information from said third series of data and from said answers, according to said rules selected in said fourth series of data,
- send to the adviser the answers given by the client and said result to be checked,
- give the client, after such checking, said result modified as needed by the adviser.

7. A system according to claim 6, **characterized in that** it operates,on the basis of a software program

8. Method according to claim 6 or claim 7, **characterized in that** it can be managed, developed and updated by the adviser working on the knowledge base.

9. System according to any one of the claims from 6 to 8, **characterised in that** said computer system and/or the acquisition function of the knowledge base are accessible electronically.

10. System according to any one of the claims from 6 to 9, **characterised in that** said computer system and/or the acquisition function of the knowledge base are accessible through Internet.

11. Machine that works by producing the result as of any one of the claims from 6 to 10.
